# EUROPÄISCHE PATENTSCHRIFT

(11) **EP 1 207 994 B1**
(45) Veröffentlichungstag und Bekanntmachung des Hinweises auf die Patenterteilung: **13.08.2003**
(21) Anmeldenummer: 00938803.4
(22) Anmeldetag: 20.06.2000
(51) Int. Cl.: B29C 65/06, B23K 20/12

(54) **MEHRKOPF-REIBSCHWEISSVERFAHREN**
MULTIPLE-HEAD FRICTION WELDING METHOD
PROCEDE DE SOUDAGE PAR FRICTION A PLUSIEURS TETES

(30) Priorität: 12.08.1999 DE 19938100
(43) Veröffentlichungstag der Anmeldung: 29.05.2002
(73) Patentinhaber: Multi Orbital Systems GmbH, 95119 Naila (DE)
(72) Erfinder: CRASSER, Leonhard, D-95119 Naila (DE)
(74) Vertreter: Fleuchaus, Leo, Dipl.-Ing.
(86) Internationale Anmeldenummer: EP0005678
(87) Internationale Veröffentlichungsnummer: WO01012420

(56) Entgegenhaltungen:
- EP-A- 0 312 504
- EP-A- 0 531 682
- EP-A- 0 707 919
- AT-B- 391 295
- DE-A- 3 039 733
- DE-A- 3 641 019
- US-A- 3 860 468
- US-A- 5 098 513
- US-A- 5 902 657
- DATABASE WPI Section Ch, Week 198402 Derwent Publications Ltd., London, GB; Class M23, AN 1984-010151 XP002150958 -& SU 1 002 120 A (FIFTH NAT BEARINGS WKS) , 10. März 1983 (1983-03-10)

## Beschreibung

Die Erfindung betrifft ein Mehrkopf-Reibschweißverfahren zum gleichzeitigen Verschweißen der Fügeflächen offener oder geschlossener Profilrahmen.

Reibschweißverfahren als solche sind an sich bekannt, wobei durch relative Bewegung und gleichzeitigen Druck Reibung erzeugt wird, um die nötige Schmelzenergie an den zu verschweißenden Flächen zu erzeugen. Es handelt sich hierbei vor allem um linearsymmetrische und rotationssymmetrische Verschweißungen, die für das Verschweißen asymmetrischer Körper, wie z. B. Profilstäbe für Fenster- und Türprofilrahmen, nicht geeignet sind.

Für die Herstellung von Fenster- und Türrahmen aus Kunststoffprofilen ist es heute gängige Praxis, die auf Gehrung geschnittenen Fügeflächen mit Hilfe eines Spiegelschweißverfahrens zu verbinden (DE-A-41 18 258). Das gleichzeitige Verschweißen der Gehrungsflächen derartiger Profilrahmen mit Hilfe von Schweißspiegeln ist als Mehrkopf-Preßstumpfschweißen bekannt, wobei mit Hilfe der Schweißspiegel die einzelnen Fügeflächen angeschmolzen und nach dem Entfernen der Spiegel diese unter Preßkraft zusammengefügt werden (DE-A-1 950 236). Dieses Mehrkopf-Preßstumpfschweißen hat Nachteile insbesondere aufgrund der hohen Prozeßzeiten, d.h. der für das Anschmelzen, das Fügen und das Aushärten benötigten Zeit. Da die Prozeßwärme nur langsam aus dem Nahtbereich abfließt, können die sich stark ausbildenden unvermeidlichen Schweißwülste erst nach einigen Minuten durch eine spanende Bearbeitung beseitigt werden, die ihrerseits wiederum sehr aufwendig ist, vor allem im Innenbereich und im Eckbereich. Schließlich benötigen derartige Mehrkopf-Preßstumpfschweißanlagen unverhältnismäßig viel Energie, da die Schweißspiegel auch in der Zeit, in der keine Schweißung durchgeführt wird, kontinuierlich auf Schweißtemperatur gehalten werden müssen. Schließlich bilden sich auf der Oberfläche der Spiegel Oxidhäute, die entfernt werden müssen, wozu in der Regel aus Teflonfolien bestehende Spiegelummantelungen Verwendung finden, die ihrerseits die Kosten erhöhen.

Für ein Reibschweißverfahren ist es auch bekannt (US-A-5902657) die miteinander zu verschweißenden Fügeflächen gegeneinander zu drücken und einer linearen Reibschwingung auszusetzen. Durch die lineare Reibschwingung ist es nicht möglich, Profilstäbe an beiden Enden gleichzeitig mit weiteren Profilstäben zu verschweißen, wenn resultierende axiale Schubvektoren in den Profilstäben vermieden werden sollen. Um derartige axiale Schubvektoren zu vermeiden, sind bei dem bekannten Reibschweißverfahren für einen Vierkantrahmen zwei Reibschweißschritte nacheinander erforderlich.

Der Erfindung liegt deshalb die Aufgabe zugrunde, ein Mehrkopf-Reibschweißverfahren und eine für die Durchführung geeignete Vorrichtung zu schaffen, mit dem die dem Mehrkopf-Preßstumpfschweißen anhaftenden Nachteile überwunden werden können und mit welchem gleichzeitig mehrere oder alle Fügeflächen von aus Profilstäben aufgebauten Profilrahmen zeitgleich in wesentlich kürzeren Prozeßzeiten im Vergleich mit Schweißspiegelverfahren und ohne die Entstehung großer Schweißwülste verschweißt werden können.

Für das Mehrkopf-Reibschweißverfahren der eingangs genannten Art wird diese Aufgabe erfindungsgemäß dadurch gelöst, daß die einzelnen Profilstäbe der Profilrahmen beiderseits benachbart zu den Fügeflächen in Reibsch weißköpfen fest verspannt und die Fügeflächen gegeneinander gedrückt werden, daß jeweils die freien Enden der Profilstäbe beiderseits der Fügeflächen mit Hilfe der Reibschweißköpfe in Schwingung versetzt werden, wobei beide Reibschweißköpfe in der X, Z- und Y. Z-Richtung im wesentlichen gegenphasig schwingen und daß die den beiden freien Enden jedes einzelnen Profilstabes zugeordneten Reibschweißköpfe ebenfalls im wesentlichen gegenphasig schwingen. Im Interesse möglichst geringer Schubvektoren in Profillängsrichtung ist vorgesehen, daß die beiden Reibschweißköpfe mit starrer Phasenlage um 180°-phasenverschoben schwingen.

Mit den Maßnahmen der Erfindung wird in vorteilhafter Weise erreicht, daß sich die Wirtschaftlichkeit der Herstellung von Profilrahmen durch eine sehr starke Verkürzung der Prozeßzeiten wesentlich erhöhen läßt. Dies ergibt sich insbesondere dadurch, daß sowohl die Anschmelz- als auch die Füge- und Haltezeit sehr kurz ist und in der Regel in der Größenordnung von 1 Minute bzw. weit darunter liegt. Da nur eine verhältnismäßig geringe Prozeßwärme eingebracht werden muß, entstehen keine starken Schweißwülste. Deshalb kann in der Regel unmittelbar nach dem Schweißvorgang mit der Versorgung der Außenflächen begonnen werden und zwar noch während der Halte-/Kühlzeit, was sich als äußerst vorteilhaft erweist.

Um einen unsicheren und nicht reproduzierbaren Schweißprozeß beim gleichzeitigen Verschweißen der Fügeflächen von Profilrahmen möglichst auszuschließen, sieht die Erfindung ferner vor, daß der Anlauf der Reibschweißköpfe von gegenphasiger Phasenlage ausgehend synchronisiert wird, und daß der Phasenwinkel zwischen den Schwingungen der Reibschweißköpfe während des Schweißvorgangs auf genaue Abstimmung geregelt bzw. gesteuert wird.

Eine besonders vorteilhafte Ausgestaltung der Erfindung sieht vor, daß die freien Enden der Profilstäbe von den Reibschweißköpfen mit einer ellipsenförmigen Schwingung beaufschlagt werden. Wenn der Sonderfall einer ellipsenförmigen Schwingung, nämlich eine Zirkularschwingung, Verwendung findet, ergeben ich besonders günstige Voraussetzunge, da durch die Synchronisation der Reibschweißköpfe bewirkt wird, daß die axial resultierenden Schubvektoren längs des eingespannten Profils frei schwingen können und keinerlei Längskräfte auf die Profilklemmungen wirken. Als belastende Kraft am Profil bleibt lediglich eine Radialkraft mit geringen resultierenden Schubvektoren in Längsrichtung, wodurch sich infolge der 180°-Phasenverschiebung eine axial pendelnde Kurbelbewegung zwischen den Profilklemmungen ergibt. Dabei entstehen nach außen keine freien Momente.

Die Vorteile der Erfindung gelten auch für clen Grenzfall der ellipsenförmigen Schwingung, wenn eine der Ellipsenachsen a oder b gegen Null geht.

Besonders vorteilhaft ist die Verwendung des Mehrkopf-Reibschweißverfahrens für die Verschweißung von Tür- und Fensterprofilen aus Kunststoffprofilen. Zu diesem Zweck sieht die Erfindung vor, daß der Tür- bzw. Fensterrahmen vor dem Verschweißen bis zum Anliegen der Fügeflächen auf einer Montageebene positioniert wird, daß die Reibschweißköpfe an den Enden der Profilstäbe benachbart zu den Fügeflächen mit ihren Profilklemmen angesetzt und während des Verschweißens zugestellt werden, und daß die Reibschweißköpfe zur gleichzeitigen Einleitung der Reibschweißeneregie in alle Fügeflächen in Abhängigkeit von den Parametern Frequenz der Schwingung, Amplitude der Schwingung und Anpreßdruck kurzzeitig in Betrieb genommen werden.

In einem solchen Fall wird für einen Viereckrahmen mit je zwei Schwingköpfen pro Gehrungsschnitt bzw. Fügeebene und einer 180° Phasenverschiebung sowie einer gleichzeitigen Synchronisation der Schwingköpfe bewirkt, daß längs des eingespannten Profils die Schubvektoren frei schwingen können und keinerlei Längskräfte auf die Profilklemmen wirken. Durch die 180° Phasenverschiebung schwingen alle Stäbe in axialer Richtung gleichzeitig im Uhrzeiger- und dann wieder im Gegenuhrzeigersinn. Ferner stellt sich eine Kreisbewegung an den gegenüberliegenden Enden jedes Profilstabes ein, der in der Fügeebene an dem gegenüberliegenden Ende des benachbarten Profilrahmens eine gegenphasige Kreisbewegung entgegenwirkt, so daß bezogen auf die Fügeebene keine nach außen freien Momente wirksam sind. Die Tatsache, daß sich in diesem Fall die freien Momente gegenseitig aufheben, wirkt sich als besonders vorteilhaft für diese Ausgestaltung des Reibschweißverfahrens aus.

Zur Verschweißung der Fügeflächen offener oder geschlossener Profilrahmen gemäß dem Verfahren der Erfindung wird erfindungsgemäß eine Mehrkopf-Reibschweißvorrichtung mit mehreren, vorzugsweise vier, auf einem Maschinenbett zustellbar angeordneten Reibschweißeinheit verwendet. Dabei ist vorgesehen, daß die Reibschweißeinheit aus zwei Reibschweißköpfen besteht, deren Schwingplatten jeweils mit einer Klemmeinheit fest verbunden sind, daß jede Klemmeinheit eine bezüglich einer zweiten Klemmplatte verschiebbare erste Klemmplatte aufweist, mit welcher jeweils ein freies Ende eines Profilstabs des Profilrahmens verspannbar ist. daß die zwei einer Fügeebene zugeordneten Reibschweißköpfe mit ihren Klemmeinheiten auf einer Montageplatte derart gegeneinander verfahrbar montiert sind, daß sie gegen die Fügeebene und auf die genaue Abmessung des Profilrahmens zustellbar sind, und daß die Montageplatte zur Positionierung der Reibschweißköpfe auf die Winkellage der Fügeebenen auf dem Maschinenbett in Parallelführungen und/oder verstellbaren Winkelführungen verschiebbar bzw. zur Ausrichtung auf die Fügeebene verschwenkbar sind.

Da gemäß der Erfindung die auf der Montageplatte montierten Reibschweißköpfe und die jeweils damit verbundenen Klemmeinheiten zur Zustellung gegenläufig in Richtung auf die Fügeebene verschiebbar sind und ferner die Zustellung des zu verschweißenden Rahmens synchronisierbar ist, läßt sich eine Verschweißung unter genauer Maßhaltigkeit des gewünschten Profilrahmens in einfacher Weise ermöglichen.

Da die Profilstäbe aus Kunststoff aufgrund der im Inneren vorhandenen verhältnismäßig dünnen Stege keiner allzu hohen Klemmkraft ausgesetzt werden dürfen, sieht die Erfindung vor, daß zur Begrenzung der an einem Kunststoff-Profilstab angreifenden Klemmkraft Metallzulagen Verwendung finden, die jeweils zwischen 1/10 mm bis 10/10 mm kleiner als das Klemmmaß des Profilstabs sind. Die mit der Schwingplatte des Reibschweißkopfes verbundene Klemmeinheit hat einen U-förmigen Aufnahmebereich für den Profilstab, wobei innerhalb des U-förmigen Aufnahmebereichs eine erste verschiebbare Klemmplatte angeordnet ist, die mit Hilfe eines Profilspannzylinders, vorzugsweise eines Pneumatikzylinders, vertikal gegen den eingelegten Profilstab verspannbar ist, der sich dabei an einem Schenkel des U-förmigen Aufnahmebereichs als Gegendruckfläche abstützt.

Schließlich ist vorgesehen, daß die Klemmeinheit in Draufsicht vorzugsweise die Form eines rechtwinkligen Dreiecks hat, wobei die Basis des U-förmigen Aufnahmebereiches einen senkrecht zur Fügeebene verläuft. Durch diese Ausgestaltung der Klemmeinheit ist es möglich, sowohl stumpf aneinander anschließende Profilstäbe als auch unter einem nahezu beliebigen Gehrungswinkel aneinander anliegenden Fügeflächen in der Klemmeinheit zu spannen, um eine immer senkrecht zu der Fügeebene stehende Zustellung zu gewährleisten.

Um die Reibschweißvorrichtung gemäß der Erfindung zum Verschweißen von Fensterrahmen verwenden zu können, die auch verhältnismäßig kurze Profilstäbe haben, wobei bei Normfenstern eine Stablänge von minimal 26 cm üblich ist, sieht die Erfindung vor, daß der Motor für den jeweiligen Antrieb des Reibschweißkopfes parallel hinter dem Schwingkopf liegt und diesen über einen Zahnriemen antreibt. Auf diese Weise lassen sich zwei an benachbarten Fügeebenen angesetzte Reibschweißköpfe so nahe aneinander positionieren, daß auch die kürzesten üblichen Profilstäbe verschweißt werden können.

Die Vorteile und Merkmale der Erfindung ergeben sich auch aus der nachfolgenden Beschreibung eines Ausführungsbeispieles in Verbindung mit den Ansprüchen und der Zeichnung. Es zeigen:
- Fig. 1: einen Profilrahmen zur Erläuterung der Wirkungsweise der Erfindung;
- Fig. 2: eine Draufsicht auf eine Reibschweißeinheit mit zwei linear zu verschweißenden Profilstababschnitten;
- Fig. 3: eine Seitenansicht der Reibschweißeinheit in Richtung Nord-Süd der Fig. 2;
- Fig. 4: eine leicht vergrößerte Seitenansicht der Klemmeinheit;
- Fig. 5: eine Draufsicht auf die Reibschweißeinheit mit zwei rechtwinklig zu verschweißenden Profilabschnitten;
- Fig. 6: eine Draufsicht auf die Reibschweißeinheit beim Verschweißen eines geraden Profilstabes mit einem Stichbogen;
- Fig. 7: eine Draufsicht auf eine Mehrkopf-Reibschweißvorrichtung zum Verschweißen eines rechtwinkligen Profilrahmens;
- Fig. 8: eine Draufsicht auf eine Mehrkopf-Reibschweißvorrichtung zum Herstellen eines Profilrahmens mit vom rechten Winkel abweichenden Eckverbindungen.

In der nachfolgenden Beschreibung sind für das Ausführungsbeispiel gleiche Teile mit gleichen Bezugszeichen versehen.

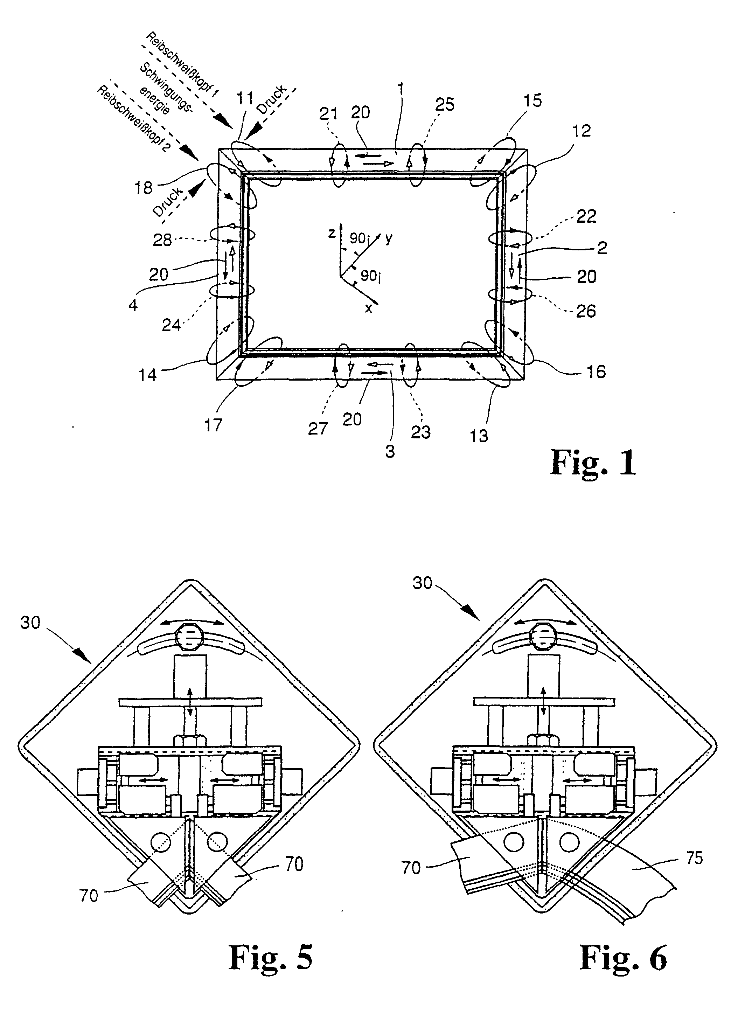

Anhand des in Fig. 1 dargestellten Mehrfach-Eckrahmens mit vier Profilstäben 1, 2, 3 und 4, die längs unter einem Winkel von 45° verlaufenden Fügeebenen miteinander verbunden sind, wird die prinzipielle Wirkungsweise der Erfindung beschrieben.

Die für das Reibschweißfügen einzuleitende Schwingungsenergie wird mit Hilfe einer nachfolgend beispielsweise beschriebenen Reibschweißeinheit 30 mit jeweils zwei Reibschweißköpfen 44 in den zu verschweißenden Eckbereich eingeleitet. Zu diesem Zweck ist jeder Reibschweißkopf 44 mit einer Klemmeinheit 64 versehen, mit der das Ende des Profilstabes festgehalten und die Schwingungsenergie in dieses Ende eingeleitet wird. Die beiden Reibschweißköpfe 44 sind in der Reibschweißeinheit 30 derart gelagert, daß die Fügeflächen in der Fügeebene gegeneinander gedrückt werden können. Die in der Klemmeinheit 64 gehaltenen Enden der Profilstäbe 1, 2, 3 und 4 werden beiderseits der Fügeebene mit Hilfe der Reibschweißköpfe 44 derart in Schwingung versetzt, daß die aneinander anliegenden Fügeflächen eine im wesentlichen gegenphasige Schwingung ausführen, die bewirkt, daß die assymetrischen bzw, nicht rotationssymmetrischen Enden der Profilrahmen durch lokale Reibungsenergien miteinander verschmelzen. Die gegenphasige Schwingung besteht vorzugsweise aus einer Orbital- bzw. Zirkularschwingung. Diese Art der Einleitung von Schwingungsenergie erlaubt eine verhältnismäßig niedrige Betriebsfrequenz und vermeidet damit eine belästigende Lärmentwicklung.

Die Erfindung sieht ferner vor, daß an jedem Gehrungseck eines Viereckrahmens eine derartige Rcibschweißeinheit 30 mit zwei Reibschweißköpfen 44 angeordnet ist, wobei die Reibschweißköpfe derart angesteuert werden, daß sie an jeweils den gegenüberliegenden freien Enden jedes einzelnen Profilstabes1, 2, 3 und 4 ebenfalls im wesentlichen gegenphasig schwingen. Dadurch wird unter der Voraussetzung einer gleichzeitigen Synchronisation aller Schwingköpfe 44 dafür gesorgt, daß in Längsrichtung des Profilstabes im wesentlichen keine Zug- bzw. Druckkräfte auftreten, sondern vielmehr die Schubvektoren 20 mit den Profilstäben frei schwingen können.

Bei dem in Fig. 1 dargestellten Viereckprofilrahmen sind daher die Schwingungen der acht am Rahmen angreifenden Reibschweißköpfe 44 derart zu synchronisieren, daß zeitgleich an den vier Eckpunkten jeweils die freien Enden der benachbarten Profilstäbe 4 : 1: 1 : 2: 2 : 3: 3 : 4 beiderseits der Fügeflächen im wesentlichen gegenphasig in der X. Z- und Y. Z-Richtung schwingen. Dabei ist dafür zu sorgen. daß die freien Enden jedes einzelnen Profilstabes ebenfalls im wesentlichen gegenphasig in Schwingung versetzt werden. Für die in Fig. 1 angedeuteten Zirkularschwingungen sind somit die Schwingungen 11. 12, 13 und 14 gegenphasig zu den Schwingungen 15, 16, 17 und 18. Durch diese Phasenlage der eingeleiteten Schwingungsenergie ergibt sich für eine Zerlegung der Schwingung in axiale und radiale Komponenten, daß die axialen Komponenten, welche den Schubvektoren 20 entsprechen, für alle Profilstäbe des Profilrahmens immer in gleicher Richtung schwingen und somit keine Zug- und Druckkräfte im Profilrahmen wirksam werden. Dabei schwingen die radialen Komponenten 21, 22, 23 und 24 gegenphasig zu den radialen Komponenten 25, 26, 27 und 28. Damit führen die Fügeebenen in den Ecken 4 : 1; 1 : 2; 2 : 3 und 3 : 4 gegenläufige Reibbewegungen aus, die das Material der Profilstäbe in der Fügeebene so weit verflüssigen, daß es unter dem senkrecht auf die Fügeebene wirksamen Druck ineinander verfließt und die beiden Profilstäbe verbindet. Die bei dem Reibvorgang lokal begrenzt entstehende Wärmemenge dringt nur sehr geringfügig in den Profilstab ein, so daß dieser sich nach dem Reibvorgang sehr rasch abkühlen kann.

Als Parameter für den Reibschweißvorgang ergeben sich vier Größen, nämlich die Frequenz und die Amplitude der Schwingung sowie der Druck und die Zeit, während welcher die beiden Fügeflächen gegeneinander gedrückt werden.

Bezüglich der Frequenz ist für eine in alle Profilstäbe eingeleitete Zirkularschwingung vorgesehen, daß die Frequenz je nach dem für die Profilstäbe verwendeten Material zwischen 20 Hz und 500 Hz liegt, wobei die Schwingung eine maximale Amplitude von weniger als 3 mm hat. Bis zum Erkalten der Verschweißung wird von einer Zeitdauer von weniger als 30 s ausgegangen.

Für den Sonderfall, daß jeweils ein Profilstab oder ein Profilstabende festgehalten und in den nächsten Profilstab bzw. das nächste Profilstabende die Schwingung eingeleitet wird, ergibt sich für die festgehaltenen Profilstäbe bzw. -enden eine Frequenz von Null Herz.

Innerhalb dieser Werte sind erhebliche Unterschiede je nach dem verwendeten Material für die Profilstäbe gegeben. Bei der Verwendung thermoplastischer Kunststoffe (PVC) mit einem E-Modul von ca. 2800 Nm bei Raumtemperatur wird erwartet, daß bei einer Schwingungsfrequenz von 75 Hz und einer Amplitude von etwa 0,4 mm der Schweißvorgang bereits nach wenigen Sekunden abgeschlossen werden kann. Diese Bedingungen wirken sich auch sehr günstig für die Lärmvermeidung aus.

Für die Durchführung des vorausstehend erläuterten Reibschweißfügens ist ein Reibschweißkopf besondes geeignet, wie er durch die DE-OS 44 36 857 bekannt ist. Der Einsatz dieses Reibschweißkopfes bietet den Vorteil, daß mehrere Reibschweißköpfe leicht zu synchronisieren sind und insbesondere eine einwandfreie Anlaufsynchronisation möglich ist, so daß der Reibschweißvorgang mit der gewünschten Phase anläuft und die Phasenlage zwischen den einzelnen Reibschweißköpfen sicher eingehalten werden kann. Der Reibschweißkopf ist bei dieser bekannten Ausführung mit einem Steuerexzenter und einer Parallelführung ausgerüstet, durch die eine eingangsseitige Rotationsenergie in eine zirkuläre parallelgeführte Bewegungsenergie umsetzbar ist. Zur Anlaufsynchronisation werden alle Exzenter der einzelnen Reibschweißköpfe auf Vollausschlag gebracht und dann jeder zweite Kopf in eine um 180° verschobene Anfangsphase. Erst in der gegenphasigen Lage werden die Profile geklemmt und dann die Reibschweißköpfe für das Reibschweißfügen in Betrieb genommen.

Eine Reibschweißeinheit mit zwei derartigen bekannten Schwingköpfen ist in Fig. 2 in Draufsicht dargestellt. Diese Reibschweißeinheit 30 ist auf einer gegenüber einer Basisplatte 31 drehbaren Drehscheibe 32 aufgebaut, deren Drehposition mit Hilfe einer Fixierschraube 33 festgehalten werden kann. Auf der Drehscheibe 32 ist eine Montageplatte 35 derart befestigt, daß sie mit Bezug auf Fig. 2 in Nord-Süd-Richtung verschoben werden kann. Zu diesem Zweck ist ein Achszylinder 37 vorgesehen, dessen Schubwelle 36 an der Montageplatte 35 angreift und diese entlang von Führungsschäften 38 in Kugelbüchsenführungen 39 vor- und zurückverschieben kann. Auf der Montageplatte 35 sind seinerseits Schieber 40 in Profilschienenführungen mit Bezug auf Fig. 2 in Ost-West-Richtung verschiebbar.

Auf den Schiebern 40 sind jeweils die beiden einer Reibschweißeinheit 30 zugeordneten und nachfolgend als Exzenterschwingköpfe 44 bezeichnete Reibschweißköpfe montiert. welche von jeweils einem Motor 46 aus mit Hilfe vorzugsweise eines Zahnriemens 47 angetrieben werden. Dieser Motor 46 ist vorzugsweise in Nord-Süd-Richtung hinter dem Exzenterschwingkopf 44 angeordnet, um die Reibschweißeinheit 30 möglichst schmal aufbauen zu können, damit das Reibverschweißen von Profilrahmen mit möglichst kurzen Profilstäben möglich ist.

Die Verschiebung der Schieber 40 und damit der Exzenterschwingköpfe 44 senkrecht zur Nord-Süd-Richtung gemäß Fig. 2 erfolgt mit Hilfe von Achszylindern 50, welche an Montagewänden 51 auf beiden Seiten der Montageplatte 35 befestigt sind. Der vom jeweiligen Achszylinder 50 ausgehende Zylinderschaft 52 ist an dem zugeordneten Schieber 40 befestigt und ermöglicht die Verschiebung derselben auf die ebenfalls in Nord-Süd-Richtung verlaufende Fügeebene zwischen den Exzenterschwingköpfen. Zur Führung an der Montagewand 50 befestigten Führungsschäfte 53 dienen dem Zweck, eine kippfreie Verschiebung der Schieber 40 zu gewährleisten. Es sind jedoch auch beliebig andere Verschiebevorrichtungen als geeignet anzusehen. Diese Führungsschäfte können ebenfalls mit einer Kugelbuchsenführung in herkömmlicher Weise zusammenwirken.

Die für das Reibschweißverfügen benötigte Schwingungsenergie wird von den Exzenterschwingköpfen 44 über eine Exzenterwelle 60 und eine Schwingplatte 62 auf die Klemmeinheit 64 übertragen. Diese Klemmeinheit hat in Draufsicht die Form eines rechtwinkligen Dreiecks und ist in Seitenansicht gemäß Fig. 4 mit einem U-förmigen Aufnahmebereich 71 versehen, dessen Basis 65 senkrecht zur Fügeebene verläuft. Die in der Draufsicht dreieckigen oberen Schenkel 66 und unteren Schenkel 67 greifen über die gesamte Breite der zu verarbeitenden Profilstäbe, welche innerhalb des U-förmigen Aufnahmebereichs 71 mit Hilfe einer Klemmplatte 68 festgehalten werden. Diese Klemmplatte 68 ist mit Hilfe eines Profilspannzylinders 69 gegen den eingelegten Profilstab vertikal verspannbar. Um die Spannkraft zu begrenzen, mit der zum Beispiel thermoplastische Kunststoffprofile beansprucht werden, können in dem U-förmigen Aufnahmebereich 71 der Klemmeinheit 64 Metallzulagen 72 eingelegt werden, die zum Beispiel in der Größenordnung von 2/10 mm kleiner als die Abmessung des entsprechenden Kunststoffprofils sind und damit die vom Profilspannzylinder 69 aufgebrachte Restkraft aufnehmen. Dadurch wird die Haltekraft begrenzt, was natürlich bei der Festlegung der Parameter für das Reibschweißfügen berücksichtigt werden muß.

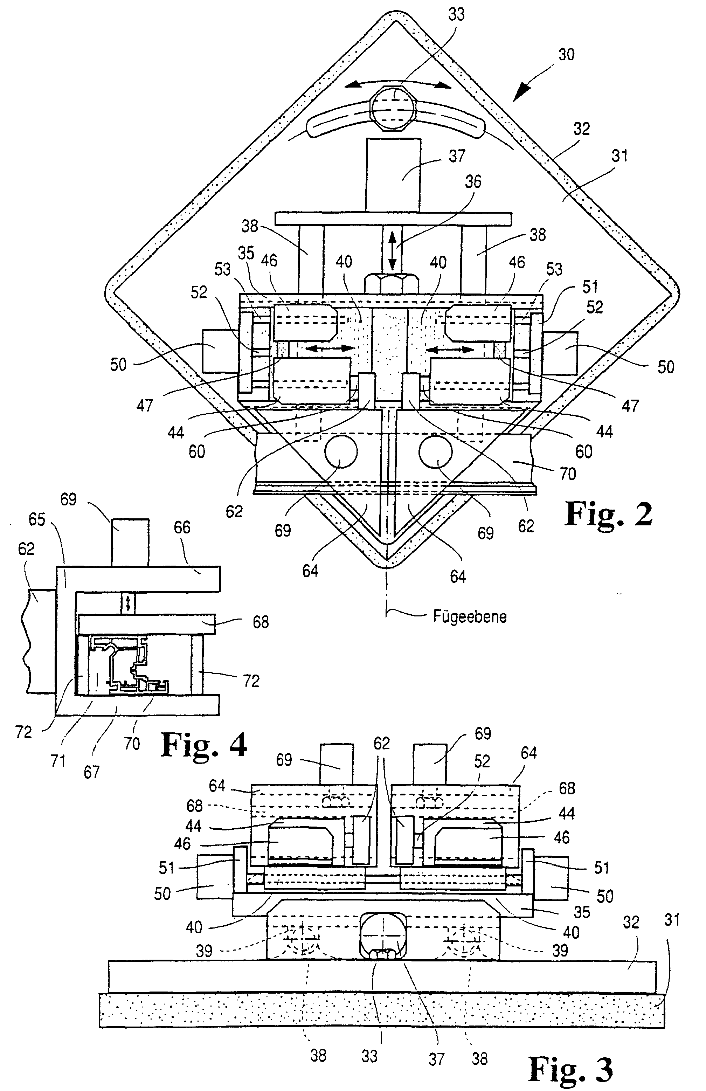

In die Klemmeinheiten 64 der in Fig. 2 dargestellten Reibschweißeinheit 30 sind Abschnitte zweier Profilstäbe 70 eingezeichnet, die in der Fügeebene stumpf miteinander verschweißt werden. In Fig. 5 ist eine Anordnung der Profilstäbe für einen 45°-Eckverschweißung dargestellt, wogegen die Verschweißung eines geradlinigen Profilstabs mit einem Stichbogen 75 in Fig. 6 gezeigt ist.

Aus den Darstellungen kann man entnehmen, daß durch die rechtwinklige Ausgestaltung der oberen und unteren Schenkel 66. 67 der Klemmeinheit 64 nahezu beliebige winklige Verschweißungen von zwei Profilstäben möglich sind.

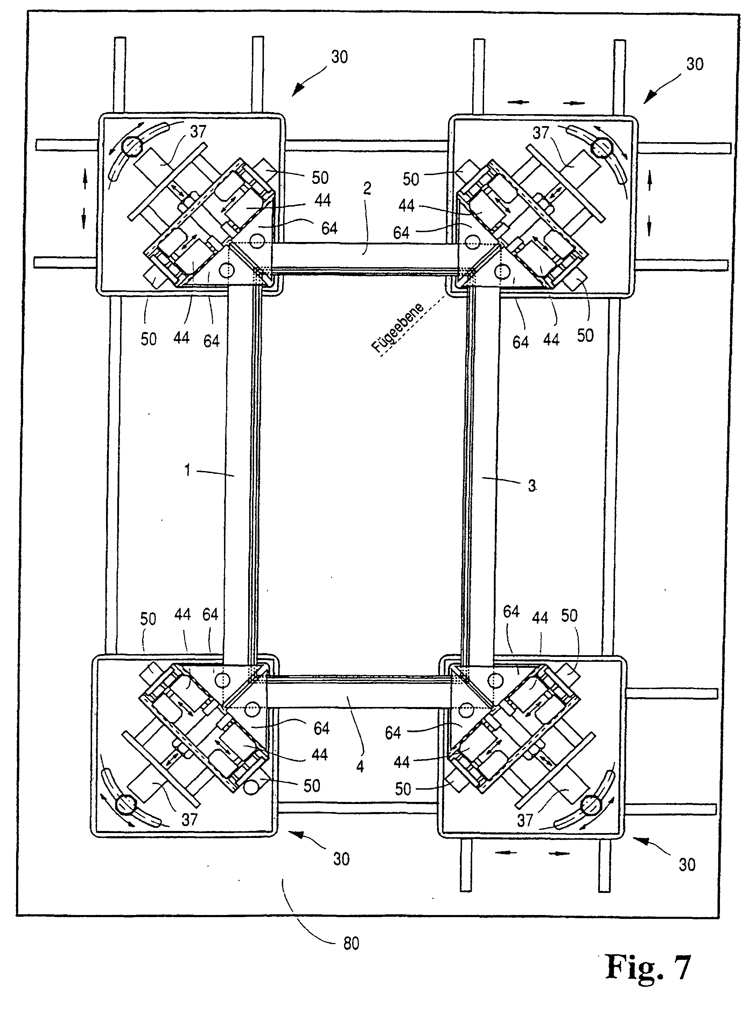

In Fig. 7 ist eine Mehrkopf-Reibschweißvorrichtung zum Verschweißen eines rechtwinkligen Viereck-Profilrahmens dargestellt. Um die vier Ecken zeitgleich verschweißen zu können, müssen die Reibschweißeinheiten 30 zunächst derart in Position gebracht werden, daß die Profilstäbe 1, 2, 3 und 4 mit ihren Fügeflächen aneinander anliegend in die Klemmeinheiten 64 eingelegt werden können. Dazu sind die Reibschweißeinheiten 30 auf einem Maschinenbett 80 entsprechend verschiebbar angeordnet, was durch an den Seiten der Reibschweißeinheiten angebrachten Doppelpfeile angedeutet wird. Eine Erläuterung der Vorrichtung zum Verschieben der einzelnen Reibschweißeinheiten ist nicht erforderlich, weil hierfür vielseitig herkömmliche Maßnahmen zur Verfügung stehen.

Nach dem pußgenauen Einlegen der Profilstäbe 1, 2, 3 und 4 in die Klemmeinheiten 64 der einzelnen Reibschweißeinheiten 30 wird vor dem Verspannen durch die vorausstehend erwähnte Anlaufsynchronisation dafür gesorgt, daß alle Köpfe phasenrichtrig anlaufen, um eine Verschiebung in der Verklemmung zu vermeiden. Die Koordination der Reibbewegungen erlaubt hierbei das zeitgleiche Verschweißen von mehreren Ecken, wobei Längskräfte in den Profilstäben, wie bereits erläutert, praktisch nicht relevant sind. Diese Tatsache kommt auch der Anforderung entgegen, daß die Klemmkräfte zum Festhalten der Profilstäbe während des Verschweißens verhältnismäßig klein sein sollen. Während der gesamten Dauer der Einleitung der Schwingenergie werden die Fügeflächen druckbelastet, um mit der Erweichung des Materials den Profilrahmen endabmessungsgenau zu verschweißen.

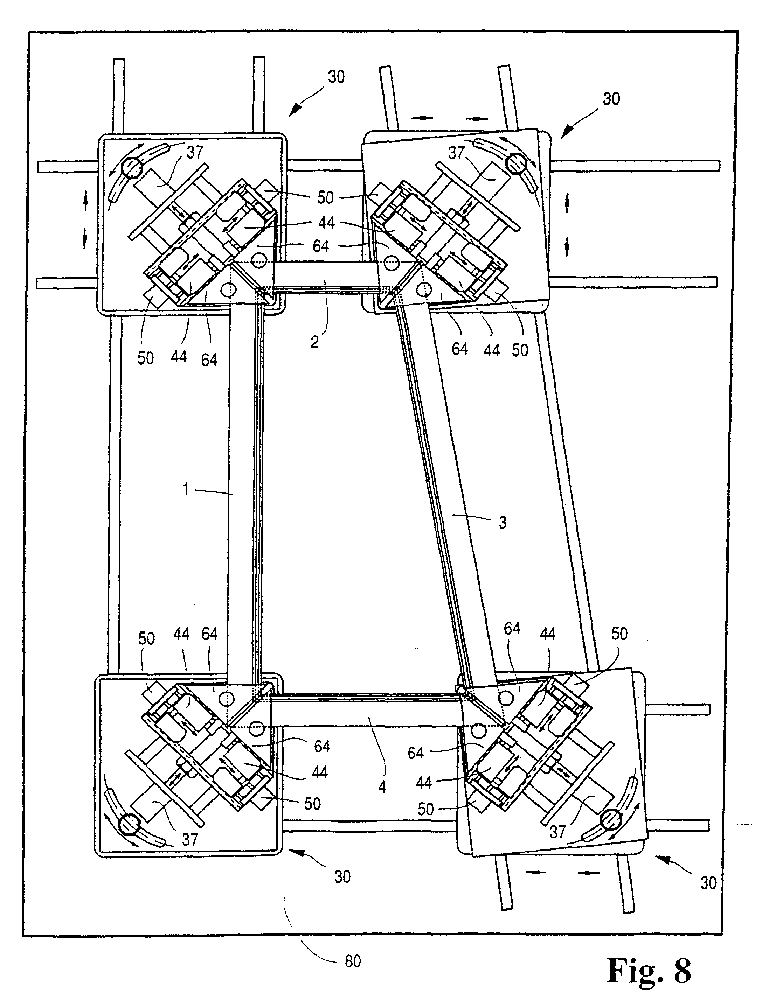

In Fig. 8 ist die in Fig. 7 gezeigte Mehrkopf-Reibschweißvorrichtung für das Reibschweißfügen eines Viereck-Profilrahmens mit von 90° abweichenden Eckverbindungen dargestellt. Dabei hat das in der Darstellung rechte obere Eck Fügeflächen mit einem über 45° liegenden Gehrungsschnitt, wogegen die Fügeflächen des rechten unteren Ecks unter einem Winkel kleiner als 45° zugeschnitten sind. Um die Fügeflächen in der Fügeebene in die richtige Position zu bringen und die Reibschweißeinrichtung auf die Fügeebene auszurichten, ist die Drehscheibe 32 gegenüber der Basisplatte 31 verdreht und mit Hilfe der Fixierschraube 33 in einem entsprechenden Führungsschlitz fixiert. Nach dieser Ausrichtung der Reibschweißeinheit 30 auf die Fügeebene und einer entsprechenden Verschiebung der Reibschweißeinheit 30 auf dem Maschinenbett 80 kann der Profilrahmen nach dem Einlegen und Spannen der Profilstäbe in die Reibschweißeinheiten entsprechend der vorausgehend erläuterten Schritte verschweißt werden. Um jedoch dafür zu sorgen, daß auch in diesem Fall möglichst keine Schubvektoren in Axialrichtung auftreten, ist es erforderlich, die Amplitude der eingeleiteten Schwingung an den Gehrungswinkel anzupassen. Dabei sind für spitze Winkel unter 45° kleinere Amplituden als für stumpfe Winkel über 45° einzustellen.

Da bei dem Reibschweißfügen nach den Maßnahmen der Erfindung die Schmelztiefen äußerst gering sind, ergeben sich kurze Auskühlzeiten und in Folge davon entstehen nur geringe Schweißaustriebe, so daß sich auch nur wenig Nachbearbeitungen, wenn überhaupt nötig, ergeben. Sollte es jedoch erforderlich sein, die Schweißaustriebe insbesondere im Innenbereich des Profilrahmens entfernen zu müssen, so kann dies unmittelbar im Anschluß an das Reibschweißfügen erfolgen.

Durch die Maßnahmen der Erfindung stellen sich wesentliche Vorteile ein, da die Taktzeit gegenüber der Spiegeischweißung erheblich verringert werden kann und die Nachbearbeitung der verschweißten Bereiche zur Beseitigung der Schweißaustriebe unmittelbar nach dem Fügen erfolgen kann, da die Schweißnaht sehr schnell auskühlt.

Obwohl im einzelnen nicht erläutert, können mit den Maßnahmen der Erfindung offene Rahmen mit ein, zwei oder drei Ecken bzw. einer ungeradzahligen Eckenzahl und geschlossene Rahmen ab vier Ecken mit einer geradzahligen Eckenzahl ohne Schwierigkeiten hergestellt werden.

Die vorstehende Erläuterung basiert auf der Einleitung einer Zirkularschwingung mit Hilfe der Exzenterschwingköpfe, wobei sich ein etwa 100%-iger Energieeintrag ergibt. Selbstverständlich sind auch andere Schwingungsmoden, wie zum Beispiel elliptische und lineare Schwingungsmoden verwendbar, wenn die Erfordernisse der Phasenlage und der Synchronisation der Exzenterschwingköpfe gewährleistet sind.

## Patentansprüche

1. Mehrkopf-Reibschweißverfahren zum gleichzeitigen Verschweißen der Fügeflächen offener oder geschlossener Profilrahmen, wobei die freien Enden der Profilstäbe der Profilrahmen beiderseits benachbart zu den Fügeflächen in Reibschweißköpfen fest verspannt und die Fügefläche gegeneinander gedrückt werden,
**dadurch gekennzeichnet,**
**daß** die mit Hilfe der Reibschweißköpfen in Schwingung versetzten freien Enden der Profilstäbe in X,Z- und Y,Z-Richtung im wesentlichen gegenphasig schwingen,
und **daß** die den beiden freien Enden jedes einzelnen Profilstabes zugeordneten Reibschweißköpfe ebenfalls im wesentlichen gegenphasig schwingen.

2. Mehrkopf-Reibschweißverfahren nach Anspruch 1,
**dadurch gekennzeichnet,**
**daß** die beiden Reibschweißköpfe um 180° phasenverschoben schwingen.

3. Mehrkopf-Reibschweißverfahren nach Anspruch 1,
**dadurch gekennzeichnet,**
**daß** der Anlauf der Reibschweißköpfe von gegenphasiger Phasenlage ausgehend synchronisiert wird,
und **daß** der Phasenwinkel zwischen den Schwingungen der Reibschweißköpfe während des Schweißvorgangs auf genaue Abstimmung geregelt bzw. gesteuert wird.

4. Mehrkopf-Reibschweißverfahren nach Anspruch 1, 2 oder 3,
**dadurch gekennzeichnet,**
**daß** die freien Enden der Profilstäbe von den Reibschweißköpfen mit einer ellipsenförmigen Schwingung beaufschlagt werden.

5. Mehrkopf-Reibschweißverfahren nach einem der Ansprüche 1 bis 4,
**dadurch gekennzeichnet,**
**daß** es zum Verschweißen von Tür- und Fensterprofilrahmen aus Kunststoff- oder Metallprofilen verwendet wird.

6. Mehrkopf-Reibschweißverfahren nach Anspruch 5,
**dadurch gekennzeichnet,**
**daß** der Fensterrahmen vor dem Verschweißen bis zum Anliegen der Fügeflächen auf einer Montageebene positioniert wird,
**daß** die Reibschweißköpfe an den Enden der Profilstäbe benachbart zu den Fügeflächen mit ihren Profilklemmen angesetzt und während des Verschweißens zugestellt werden.
und **daß** die Reibschweißköpfe zur gleichzeitigen Einleitung der Reibschweißenergie in alle Fügeflächen in Abhängigkeit von den Parametern Frequenz der Schwingung, Amplitude der Schwingung und Anpreßdruck kurzzeitig in Betrieb genommen werden.

7. Mehrkopf-Reibschweißverfahren nach Anspruch 6,
**dadurch gekennzeichnet,**
**daß** eine Glasscheibe bzw. Füllung vor dem Verschweißen der Fensterprofilrahmen in den Glasfalz eingesetzt wird.

8. Mehrkopf-Reibschweißverfahren nach einem oder mehreren der Ansprüche 1 bis 7,
**dadurch gekennzeichnet,**
**daß** die freien Enden der Profilstäbe mit einer Zirkularschwingung zwischen 20Hz und 500Hz und einer Amplitude < 3 mm für weniger als 30s beaufschlagt werden.

9. Mehrkopf-Reibschweißvorrichtung mit mehreren, vorzugsweise vier auf einem Maschinenbett (80) zustellbar angeordneten Reibschweißeinheiten (30) zum Verschweißen der Fügeflächen offener und geschlossener Profilrahmen zur Durchführung des Verfahrens nach einem oder mehreren der Ansprüche 1 bis 8,
**dadurch gekennzeichnet,**
**daß** die Reibschweißeinheit (30) aus zwei Reibschweißköpfen (44) besteht, deren Schwingplatten (62) jeweils mit einer Klemmeinheit (64) fest verbunden sind,
**daß** jede Klemmeinheit (64) eine bezüglich einer zweiten Klemmplatte (unterer Schenkel 67) verschiebbare erste Klemmplatte (68) aufweist, mit welcher jeweils ein freies Ende eines Profilstabs (70) des Profilrahmens verspannbar ist,
**daß** die zwei einer Fügeebene zugeordneten Reibschweißköpfe (44) mit ihren Klemmeinheiten (64) auf einer Montageplatte (35) derart gegeneinander verfahrbar montiert sind, daß sie gegen die Fügeebene zustellbar sind,
und **daß** die Montageplatte (35) zur Positionierung der Reibschweißköpfe (44) auf die Winkellage der Fügeebenen auf dem Maschinenbett (80) in Parallelführungen und/oder verstellbaren Winkelführungen verschiebbar bzw. zur Ausrichtung auf die Fügeebene verschwenkbar sind.

10. Mehrkopf-Reibschweißvorrichtung nach Anspruch 9,
**dadurch gekennzeichnet,**
**daß** die auf der Montageplatte (35) montierten Reibschweißköpfe (44) und die jeweils damit verbundenen Klemmeinheiten (64) zur Zustellung gegenläufig in Richtung auf die Fügeebene verschiebbar sind,
und **daß** die Zustellung auf das Endmaß des zu verschweißenden Rahmens synchronisierbar ist.

11. Mehkropf-Reibschweißvorrichtung nach Anspruch 10,
**dadurch gekennzeichnet,**
**daß** zur Begrenzung der an einem Kunststoff-Profilstab angreifenden Klemmkraft Metallzulagen Verwendung finden, die jeweils zwischen 1/10 mm bis 10/10 mm kleiner als das Klemmmaß des Profilstabs sind.

12. Mehrkopf-Reibschweißvorrichtung nach einem der Ansprüche 9 bis 11,
**dadurch gekennzeichnet,**
**daß** die mit der Schwingplatte (62) verbundene Klemmeinheit (64) einen U-förmigen Aufnahmebereich (71) für den Profilstab (70) und die erste verschiebbare Klemmplatte (68) hat,
und **daß** die erste Klemmplatte (68) mit Hilfe eines Profilspannzylinders (69), vorzugsweise eines Pneumatikzylinders, vertikal gegen den eingelegten Profilstab (70) verspannbar ist.

13. Mehrkopf-Reibschweißvorrichtung nach einem oder mehreren der Ansprüche 9 bis 12,
**dadurch gekennzeichnet,**
**daß** die Klemmeinheit (64) in Draufsicht die Form eines rechtwinkligen Dreiecks hat, wobei die Basis (65) des U-förmigen Aufnahmebereiches (71) senkrecht zur Fügeebene verläuft.

14. Mehrkopf-Reibschweißvorrichtung nach einem oder mehreren der Ansprüche 9 bis 13
**dadurch gekennzeichnet,**
**daß** der Motor (46) für den jeweiligen Antrieb des Reibschweißkopfes (44) parallel hinter dem Reibschweißkopf liegt und diesen über einen Zahnriemen (47) antreibt.

15. Mchrkopf-Reibschweißverfahren nach einem oder mehreren der Ansprüche 9 bis 14,
**dadurch gekennzeichnet,**
**daß** zur Aufnahme der zwischen benachbarten Doppel-Reibschweißeinheiten (30) auftretenden inneren Kräfte Blockstangen montiert sind.

## Claims

1. Multi-head friction welding process for the concurrent welding of the jointure surfaces of open or closed profile frames, with the free ends of the profile rods of the profile frames being firmly clamped in position in a friction welding head at opposite sides adjacent the jointure surfaces and the jointure surfaces are pressed toward each other,
**characterized in**
**that** the free ends of the profile rods are oscillated by means of the friction welding heads in X,Z and Y,Z direction essentially in an opposed phase relationship,
and **that** the friction welding heads associated with the two free ends of each individual profile rod also oscillate essentially in an opposite phase relationship.

2. Multi-head friction welding process according to claim 1, **characterized in that** the two friction welding heads oscillate out of phase by 180°.

3. Multi-head friction welding process according to claim 1,
**characterized in**
**that** the startup of the friction welding heads is synchronized with a start at opposite phase positions,
**characterized in**
**that** the startup of the friction welding heads is synchronized with a start at opposite phase positions,
and **that** the phase angle between the oscillations of the friction welding heads is controlled during the welding procedure so as to remain accurately tuned.

4. Multi-head friction welding process according to claim 1, 2, or 3,
**characterized in**
**that** an elliptical oscillation pattern is applied to the free ends of the profile rods.

5. Multi-head friction welding process according to one of the claims 1 to 4,
**characterized in**
**that** the method is used for welding of door and window profile frames of plastic or metal foils.

6. Multi-head friction welding process according to claim 5,
**characterized in**
**that**, before the welding, the window frame is positioned on an assembly plane so that the surfaces to be joined are disposed adjacent each other,
**that** the friction welding heads are positioned with their profile clamps at the ends of the profile rods adjacent the surfaces to be joined and are moved toward each other during the welding,
and **that** the friction welding heads are shortly operated depending on the parameters frequency of the oscillation, amplitude of the oscillation and engagement pressure for the concurrent introduction of the friction welding energy into all jointure surfaces.

7. Multi-head friction welding process according to claim 6,
**characterized in**
**that** a glass panel or respectively, insert is inserted into the glass channel before the welding of the profile frame.

8. Multi-head friction welding process according to one or more of the claims 1 to 7,
**characterized in**
**that** the free ends of the profile rods are subjected to a circular oscillation of between 20Hz and 500Hz and an amplitude < 3 mm for less than 30s.

9. Multi-head friction welding apparatus with several, preferably four, friction welding units (30) adjustably disposed on a machine bed (80) for welding the jointure surfaces of open and closed profile frames for performing the method according to one or more of the claims 1 to 8,
**characterized in**
**that** the friction welding unit (30) consists of two friction welding heads (44) whose oscillation plates (62) are each firmly connected to a clamping unit (64),
**that** each clamping unit (64) includes a first clamping plate (68) which is movable with respect to a second clamping plate (lower leg 67) and with each of which a free end of a profile rod (70) of the profile frame can be locked,
**that** the two friction welding heads (64) assigned to a jointure plane are movable relative to each other together with their clamping units (64) on an assembly plate (35) in such a way that they are movable toward the jointure plane,
and **that** the mounting plate (35) is slidable for the positioning of the friction welding heads (44) relative to the angular orientation of the jointure plane on the machine bed (80) in parallel guide structures and/or is pivotably adjustable in angular guide means for proper orientation of the jointure planes.

10. Multi-head friction welding apparatus according to claim 9,
**characterized in**
**that** the friction welding heads (44) mounted on the assembly plate (35) and the clamping units (64) connected thereto are movable in opposite directions toward the jointure plane,
and **that** the advance can be synchronized with the final dimensions of the frame to be welded.

11. Multi-head friction welding apparatus according to claim 10,
**characterized in**
**that**, for limiting the clamping force applied to the plastic profile rod, metal inserts are provided which metal inserts have a size of 1/10 mm to 10/10 mm less than the clamping dimension of the profile rod.

12. Multi-head friction welding apparatus according to one of the claims 8 to 11,
**characterized in that** the clamping unit (64) connected to the oscillation plate (62) has a U-shaped reception area (71) for the profile rod (70) and the first movable clamping plate (68),
and that the first clamping plate (68) is engageable with the aid of a profile clamping cylinder (69), preferably a pneumatic cylinder, vertically with the inserted profile rod (70).

13. Multi-head friction welding apparatus according to one or several of the claims 8 to 12,
**characterized in**
**that** the clamping unit (64) has, in a top view, the shape of a rectangular triangle wherein the base (65) of the U-shaped reception area (11) extends normal to the jointure plane.

14. Multi-head friction welding apparatus according one or several of the claims 8 to 13,
**characterized in**
**that** the motor (46) for driving the respective friction welding head (44) is disposed behind the friction welding head and parallel thereto and drives the friction welding head by way of a toothed belt (47).

15. Multi-head friction welding process according to one or more of the claims 8 to 14,
**characterized in**
**that**, for the reception of the internal forces effective between adjacent double friction welding units (30), blocking rods are provided.

## Revendications

1. Procédé de soudage par friction à plusieurs têtes pour souder simultanément les surfaces de jonction de cadres en profilés ouverts ou fermés, les extrémités libres des profilés du cadre en profilés étant immobilisées par serrage ou sous tension de chaque côté, à proximité des surfaces de jonction, dans des têtes de soudage par friction, et les surfaces de jonction étant appuyées l'une contre l'autre, **caractérisé en ce que**
les extrémités libres des profilés que les têtes de soudage par friction font osciller oscillent essentiellement en opposition de phase dans les directions X, Z et Y, Z, et **en ce que** les têtes de soudage par friction associées aux deux extrémités libres de chaque profilé oscillent également essentiellement en opposition de phase.

2. Procédé de soudage par friction à plusieurs têtes selon la revendication 1, **caractérisé en ce que** les deux têtes de soudage par friction oscillent avec un décalage de phase de 180°.

3. Procédé de soudage par friction à plusieurs têtes selon la revendication 1, **caractérisé en ce que** le démarrage des têtes de soudage par friction est synchronisé à partir de positions en opposition de phase, et **en ce que** l'angle de phase entre les oscillations des têtes de soudage par friction au cours du processus du soudage est réglé ou commandé de manière à être parfaitement coordonné.

4. Procédé de soudage par friction à plusieurs têtes selon la revendication 1, 2 ou 3, **caractérisé en ce que** les têtes de soudage par friction sollicitent les extrémités libres des profilés avec une oscillation elliptique.

5. Procédé de soudage par friction à plusieurs têtes selon l'une des revendications 1 à 4, **caractérisé en ce qu'**il est mis en oeuvre pour souder des cadres de porte ou de fenêtre en profilés en matière plastique ou en métal.

6. Procédé de soudage par friction à plusieurs têtes selon la revendication 5, **caractérisé en ce que** le cadre de fenêtre est positionné sur un plan de montage avant la soudure et jusqu'à ce que les surfaces de jonction soient appliquées les unes contre les autres, **en ce que** les têtes de soudage par friction sont placées avec leurs mâchoires sur les extrémités des profilés, au voisinage des surfaces de jonction, et sont approchées de ces dernières au cours de la soudure, et **en ce que** les têtes de soudage par friction sont brièvement mises en marche pour envoyer simultanément l'énergie de soudage par friction dans toutes les surfaces de jonction en fonction des paramètres que sont la fréquence de l'oscillation, l'amplitude de l'oscillation et la pression d'application.

7. Procédé de soudage par friction à plusieurs têtes selon la revendication 6, **caractérisé en ce qu'**une vitre ou un panneau est logé(e) dans la rainure à verre avant la soudure des cadres de fenêtre en profilés.

8. Procédé de soudage par friction à plusieurs têtes selon l'une ou plusieurs des revendications 1 à 7, **caractérisé en ce que** les extrémités libres des profilés sont sollicitées par une oscillation circulaire comprise entre 20 Hz et 500 Hz et avec une amplitude < 3 mm pendant moins de 30 s.

9. Dispositif de soudage par friction à plusieurs têtes, comprenant plusieurs, de préférence quatre unités de soudage par friction (30) placées sur un socle de machine (80) de manière à pouvoir avancer pour souder les surfaces de jonction de cadres en profilés ouverts ou fermés, pour mettre en oeuvre le procédé selon l'une ou plusieurs des revendications 1 à 8, **caractérisé en ce que** l'unité de soudage par friction (30) est composée de deux têtes de soudage par friction (44) dont les plaquettes oscillantes (62) sont reliées chacune fixement à une unité de serrage (64), **en ce que** chaque unité de serrage (64) présente une première plaquette de serrage (68) mobile par rapport à une seconde plaquette de serrage (partie inférieure 67), à l'aide de laquelle il est chaque fois possible d'immobiliser par serrage ou sous tension une extrémité libre d'un profilé (70) du cadre en profilés, **en ce que** les deux têtes de soudage par friction (44) associées à un plan de jonction sont montées sur une plaque de montage (35) avec leurs unités de serrage (64) de façon à être mobiles l'une vers l'autre, de manière à ce qu'elles puissent être approchées du plan de jonction, et **en ce que** la plaque de montage (35) peut coulisser sur le socle (80) de la machine dans des glissières parallèles ou dans des glissières en angle réglables pour positionner les têtes de soudage par friction (44) conformément à la position angulaire des plans de jonction, ou peut pivoter afin de l'aligner sur le plan de jonction.

10. Dispositif de soudage par friction à plusieurs têtes selon la revendication 9, **caractérisé en ce que** les têtes de soudage par friction (44) montées sur la plaque de montage (35) et les unités de serrage (64) qui y sont chaque fois reliées peuvent être déplacées en sens inverse pour les faire avancer en direction du plan de jonction, et **en ce que** l'avance peut être coordonnée à la dimension finale du cadre à souder.

11. Dispositif de soudage par friction à plusieurs têtes selon la revendication 10, **caractérisé en ce que**, pour limiter la force de serrage s'exerçant sur un profilé en matière plastique, on utilise des garnitures en métal qui sont à chaque fois de 1/10 mm à 10/10 mm inférieures à la dimension de serrage du profilé.

12. Dispositif de soudage par friction à plusieurs têtes selon l'une des revendications 9 à 11, **caractérisé en ce que** l'unité de serrage (64) reliée à la plaquette oscillante (62) comporte une zone de réception en forme de U (71) pour le profilé (70) et la première plaquette de serrage mobile (68), et **en ce que** la première plaquette de serrage (68) peut être immobilisée verticalement contre le profilé (70) mis en place, au moyen d'un vérin d'immobilisation (69), de préférence un vérin pneumatique.

13. Dispositif de soudage par friction à plusieurs têtes selon l'une ou plusieurs des revendications 9 à 12, **caractérisé en ce que** l'unité de serrage (64) vue du dessus a la forme d'un triangle rectangle, la base (65) de la zone de réception en forme de U (71) s'étendant perpendiculairement au plan de jonction.

14. Dispositif de soudage par friction à plusieurs têtes selon l'une ou plusieurs des revendications 9 à 13, **caractérisé en ce que** le moteur (46) destiné à entraîner chacune des têtes de soudage par friction (44) est placé parallèlement derrière ladite tête de soudage par friction et entraîne cette dernière par l'intermédiaire d'une courroie dentée (47).

15. Dispositif de soudage par friction à plusieurs têtes selon l'une ou plusieurs des revendications 9 à 14, **caractérisé en ce que** des barres de liaison sont montées pour absorber les forces internes survenant entre des unités de soudage par friction doubles (30) voisines.
